Europäisches Patentamt

(19) European Patent Office

Office européen des brevets

(11) Publication number: **0 023 788**
**B1**

(12) **EUROPEAN PATENT SPECIFICATION**

(45) Date of publication of patent specification: **13.04.83**

(51) Int. Cl.³: **B 29 C 27/20, F 16 L 47/02**

(21) Application number: **80302440.5**

(22) Date of filing: **18.07.80**

(54) Arrangement and method for covering elongate substrates.

(30) Priority: **19.07.79 US 58743**

(43) Date of publication of application:
**11.02.81 Bulletin 81/6**

(45) Publication of the grant of the patent:
**13.04.83 Bulletin 83/15**

(84) Designated Contracting States:
**BE DE FR IT NL SE**

(56) References cited:
**US - A - 3 379 218**
**US - A - 3 455 336**
**US - A - 3 770 556**
**US - A - 3 959 052**
**US - A - 4 200 676**

(73) Proprietor: **RAYCHEM CORPORATION**
**300 Constitution Drive**
**Menlo Park California 94025 (US)**

(72) Inventor: **Wallace, Barnie Alvin Jr.**
**777-40 San Antonio Road**
**Palo Alto, California 94303 (US)**

(74) Representative: **Dlugosz, Anthony Charles et al,**
**Raychem Limited Patent and Legal Department**
**Faraday Road**
**Dorcan Swindon Wiltshire SN3 5HH (GB)**

Courier Press, Leamington Spa, England

## Arrangement and method for covering elongate substrates

This invention relates to an arrangement for covering at least part of an elongate substrate which comprises a heat-recoverable polymeric closure member in sheet form adapted to be wrapped around the substrate so that one edge portion thereof overlies an opposite edge portion and recovered about the substrate by application of heat, a patch member for retaining the edge portions together during recovery of the closure member, and a layer of adhesive having a tack temperature below the recovery temperature of the closure member for retaining the patch member on the closure member.

Many methods of enclosing elongate substrates have been proposed, and reference may be made, for example, to U.S. Patents Nos. 3,379,218; 3,455,336; 3,530,898; 3,542,077; 3,574,313 and 3,770,556 and 4,200,676.

The present invention is characterized in that the layer of adhesive has a lap shear strength at 150°C of from 70 to 14,100 kg.m$^{-2}$ (0.1 to 20 psi), preferably from 200 to 14,100 kg.m$^{-2}$ (0.3 to 20 psi) and especially from 700 to 8,500 kg.m$^{-2}$ (1 to 12 psi), and the patch member has a modulus at 150°C of from 1,400 to 141,000 kg.m$^{-2}$ (2 to 200 psi) preferably from 7000 to 141,000 kg.m$^{-2}$ (10 to 200 psi), especially from 35,000 to 106,000 kg.m$^{-2}$ (50 to 150 psi), and an elongation at 150°C of from 10 to 1000%, preferably from 50 to 200%, the arrangement being such that when the closure member is heated, it will recover about the substrate with the edge portions thereof retained together by the patch member and recovery of the closure member will cause at least part of the patch member to stretch by at least 5%, preferably from 5 to 50% in the direction of recovery of the closure member.

The arrangement according to the present invention has a number of advantages as compared with the previously proposed closure systems, for example it is not necessary (as it is in U.S. Patent No. 3,770,556) for the edge portions of the closure member to be coated with a contact adhesive and so a single arrangement can be used to cover substrates of widely differing sizes. In addition it is possible to use a patch member in the present arrangement that is less bulky and complex than that used in the system described in U.S. Patent No. 4,200,676, so that the underlying adhesive can be heated more quickly and will, when the heat source is removed, cool and bond that patch member to the closure member, more quickly, thereby enabling the installer to move to a different section of the substrate without too great a delay. A further advantage of the arrangement according to the invention is that, in certain cases, it is possible to provide a covering for substrates of irregular diameter as in the case where a telephone or high-voltage cable transition or a joint between pipes of different diameter is to be covered. To accommodate such a transition the patch must be able to deform (i.e. stretch) in the areas of greatest stress to thereby more evenly distribute the recovery stress and avoid peeling of the patch away from the closure member. The substantially undeformable patch described in the U.S. Patent No. 4,200,676 cannot stretch significantly and hence is subject to pulling away of the closure in regions of high recovery stress such as is caused by a major diametric transition. Likewise, a reinforced patch is unsuitable for substrates of small diameter since its comparative stiffness makes it difficult or impossible for the installer to position it on the closure member so that it will conform to the closure member.

The patch member used in the present invention is preferably of uniform cross-section and composition and preferably has the layer of adhesive initially adhered to it. The patch member is preferably composed of a polymeric material, which polymer will preferably be cross-linked, e.g. by irradiation, so that it retains strength even when it is heated above its crystalline melting point but can nevertheless stretch. However, other materials e.g. aluminium foil, can be used provided that they can stretch by at least 5% during installation. Reinforced patch members of the kind disclosed in U.S. Patent No. 4,200,676 do not, as indicated above, stretch sufficiently. It has been found that if the patch member cannot stretch circumferentially by at least about 5% at any point along its length, and thereby help to accommodate recovery of the closure member and reduce and more uniformly distribute the shear stress on the adhesive layer, the closure member can exert sufficient recovery force at one or more points to slip away from underneath the patch and thereby expose the substrate. Such incomplete covering of the substrate by the closure member is, of course, totally unacceptable. Often at least a part of the patch should stretch by up to about 5% or even more. Preferably no part of the patch should stretch by more than about 50%. Stretching in excess of about 50% is undesirable as it permits the sheet closure to contract during recovery to such an extent that it may no longer overlap and will therefore not fully cover the substrate, i.e. it will leave only the patch itself over a longitudinal band of the substrate which is unacceptable.

When a substrate of varying cross-section is being covered, the patch may stretch only in the area of greatest circumference, and may not stretch at all (or may indeed contract) in other areas. Since the patch will preferably be capable of stretching by at least 5%, it is generally preferred that it should not be heat-shrinkable.

However, since the forces generated by recovery of the closure member can overcome forces generated by any tendency of the patch to shrink on heating, it is possible for the patch to be heat-shrinkable; it can also be heat-expandable. Since the patch must secure the overlapped portions of the closure member together along substantially the whole length of the closure member overlap, it is preferred that any change in the axial length of the patch during installation should substantially match any change occurring in the axial length of the closure member. Generally, this means that its axial length should remain substantially unchanged during installation. Bearing these points in mind it is preferred that the patch member comprise a polymeric material which, when heated in the absence of restraint, undergoes a maximum dimensional change in the axial and/or circumferential (i.e. longitudinal and/or transverse) direction of $-10$ to $+10\%$, preferably substantially zero. Unrestrained dimensional changes in excess of $\pm 10\%$ are undesirable because if the patch undergoes such change when unrestrained, it tends to curl under along its periphery in use thereby inhibiting good adhesion to the underlying closure member and precluding effective sealing. The patch member preferably has a thickness in the range of from 0.25 to 2.54 mm (10 to 100 mils), more preferably from 0.38 to 0.76 mm (15 to 30 mils). The thickness of the patch member should preferably be less than the recovered thickness of the closure member and most preferably will be less than the thickness of the closure member before recovery.

It has been found that the relationship between the maximum recovery force of the closure member (i.e. the recovery force when shrinkage begins) and the product of the thickness and the hot modulus of the patch member has an important influence on successful operation of the method of the present invention. It is conjectured that this is at least in part because this relationship significantly affects the radial forces which press together the overlapping portions of the closure member. When at least part of the interior surface of the first marginal portion and the exterior surface adjacent to the second marginal portion in contact therewith are free from any coating, the heating of the closure member, coupled with the radial component of the recovery forces, may cause melt-bonding of the first and second marginal portions which is particularly desirable in terms of achieving a secure closure. The product of the thickness of the patch member and its modulus at 150°C is preferably at least 0.36 times but not more than 20 times, more preferably between about 0.5 and 10.0 times and especially at least equal to, the maximum recovery force (per unit length) of the closure member, in order that the patch member be sufficiently compliant and extensible. In carrying out the method of the present invention, it is desirable that in the finished product, the first and second marginal portions of the closure member should remain in overlapping contact with each other throughout their length. Proper correlation of the hot modulus and thickness of the patch with the recovery force of the closure member has an important influence in obtaining this valuable result.

The patch member may have, on the interior surface thereof, one or more areas of pressure-sensitive adhesive which can serve to hold the patch in place until the hot melt adhesive reaches its tack temperature. However, the presence of such pressure-sensitive adhesive areas reduces the total strength of the ultimate bond between the patch and closure member, and other means are preferably employed to keep the patch in place.

The axial length of the patch member is generally determined by the length of the closure member and will preferably be substantially equal to that of the closure member. Virtually any length of closure member can be successfully accommodated using the patch design of the present invention. The wider the patch, the more likely it is to secure together the overlapping portions of the closure member.

Typically the width of the patch will be from to 25.4 cm (2 to 10 inches). With substrates of small circumference, especially when the substrate is of irregular cross-section, the maximum width for the patch will be influenced by the circumference of the substrate, the shrinkage of the closure member and the slippage on recovery (if any) of the marginal portions of the closure member relative to the patch. For this reason, the increased efficiency of the patch member of the present invention, as compared to those previously taught, is particularly valuable when the substrate to be covered is of small circumference, e.g. no greater than about 51 cm (20 inches), especially at most 38 cm (15 inches), and/or of irregular cross-section, e.g. the ratio of the maximum circumference to the minimum circumference is greater than about 2:1. Likewise, when substrates of large diameter (i.e. greater than 40 cm or 16 inches) are to be covered the improved efficiency of the present patch design is a major advantage in that its narrow width in comparison with prior art designs enables rapid heating and installation and reduced material cost.

The adhesive preferably has a tack temperature below 140°C. Preferably it has a melt viscosity at 150°C of at least $10^2$ poise, more preferably at least $10^4$ poise, and preferably has a peel strength of at least 90 kg.m$^{-1}$ (5 pli). The adhesive may be a hot-melt adhesive or, preferably a hot-melt adhesive that has been lightly cross-linked and has a gel content of at least 1%, especially at least 5%. Hot-melt or modified hot-melt adhesives have the advantage of higher peel strengths as compared with contact adhesives, and so in contrast with the system described in U.S.. Patent No. 3,770,556, allow a patch to be used in cases where the closure would be subject to significant peel forces. As adhesives that may be used in the arrangement according to the invention, certain adhesives described in U.S. Patent No. 4,200,676 and German Offenlegungsschrift No. 2,723,116 are suitable provided they satisfy the minimum requirements (e.g. lap shear strength) mentioned above. The adhesive layer advantageously has a thickness of from 0.12 to 2.54 mm (5 to 100 mils). The preferred thickness is 0.25 to 0.51 mm (10 to 20 mils) although in some cases slightly thicker layers, e.g. from 0.38 to 0.76 mm (15 to 30 mils) may be used.

The sheet closure member may be any of the heat-shrinkable polymeric closure members of the type generally known to the prior art which provide a suitable surface for the patch member to adhere to. The present invention encompasses the use of sheet closure members formed by two or more sheet members joined to each other along axially extending bond lines, with at least one of the joints being formed between marginal portions from different closure members by means of a patch member in accordance with the present invention. Good results can be obtained when at least part of the closure member is not heat-recoverable. However, a drawback of a closure member of this kind is that it would be suitable for use only with substrates of a comparatively limited range of circumferential sizes, whereas the preferred procedure in most circumstances is to make use of a uniformly expanded sheet of cross-linked polymeric material such as polyethylene which can be utilized to fit round any size of substrate by merely varying the degree of overlap, which is conveniently from 2.54 to 25.4 cm (1 to 10 inches). The closure member will normally be from 0.254 to 3.81 mm (10 to 150 mils) thick and have a circumferential expansion ratio of 1.05 to 10, preferably from 1.1 to 10, especially from 1.5 to 5, and a modulus at 150°C of from 1400 to 141,000 kgm$^{-2}$ (2 to 200 psi), preferably from 20,000 to 42,000 kg.m$^{-2}$ (30 to 60 psi). Preferably the closure member is uniaxially expanded in the direction transverse to the longitudinal axis of the substrate. The recovery force of the closure member will usually be from 1.8 to 360 kg.m$^{-2}$ (0.1 to 20 pli), preferably from 18 to 180 kg.m$^{-2}$ (1 to 10 pli). It is usually desirable for the closure member to have a coating of an adhesive (preferably a hot-melt adhesive) or mastic on the interior surface of the closure member which interior surface is moved into contact with the substrate when the closure member shrinks. As noted above, the best closure often results when at least part of the interior surface of the first marginal portion which overlaps the exterior surface of the second marginal portion is free from any such coating. However, completely satisfactory results can often be obtained even when the coating of adhesive or mastic covers the whole of the overlap area.

When bonding the patch member to the closure member, the patch will normally be heated to a temperature of about 80 to 300°C, generally 110—150°C.

According to another aspect, the invention provides a method of covering at least part of an elongate substrate by means of an arrangement according to the invention, which comprises wrapping the closure member around the substrate so that one edge portion of the closure member overlies an opposite edge portion of the closure member, heating the adhesive to its tack temperature, placing the patch member and the layer of adhesive over the exposed edge and outwardly disposed edge portions of the closure member so that the layer of adhesive is interposed between the closure member and patch member, pressing the patch member against the closure member to bond them together, and heating the closure member to cause it to recover into circumferential contact with the substrate, the method being conducted under conditions such that the patch member remains bonded to the closure member over at least a major portion of its length and at least part of the patch member is stretched by at least 5% in the direction of recovery of the closure member.

One arrangement according to the invention and a method for its installation will now be described by way of example, with reference to the accompanying drawings in which:

Figure 1 is a perspective view of a closure member installed in accordance with the present invention;

Figure 2 is a view in cross-section of a patch member used in the present invention;

Figure 3 is a view in cross-section of a mastic or adhesive coated heat-recoverable closure member useful in the present invention;

Figures 4, 5 and 6 illustrate the method of the present invention by which the ends of a closure member are joined; and

Figure 7 illustrates a pipe system containing a transition which can be covered by the arrangement of the present invention.

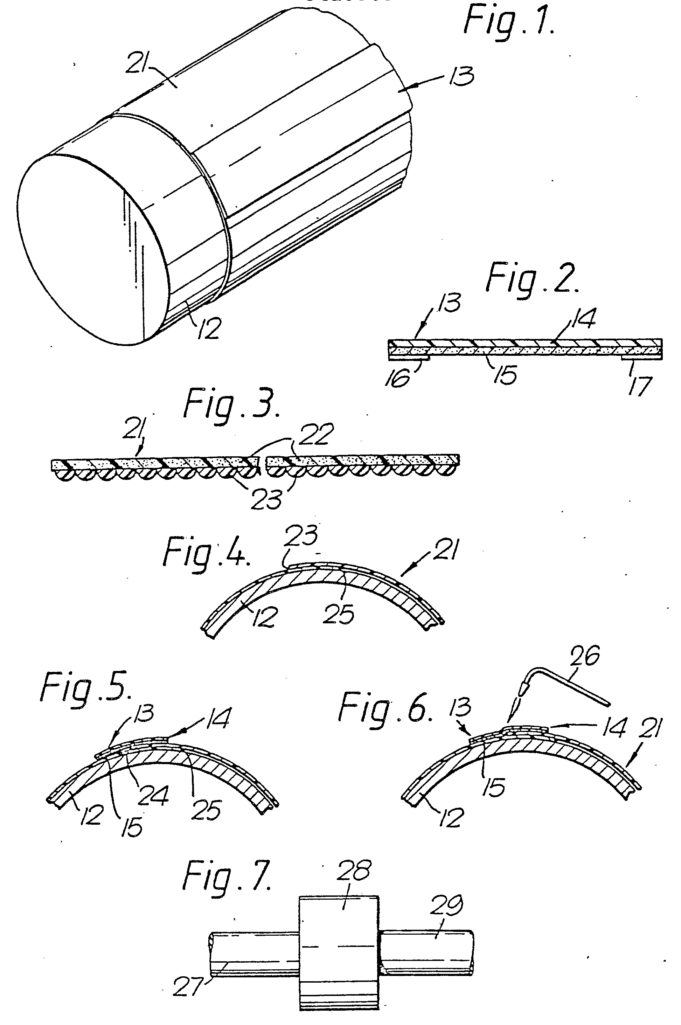

Referring to the accompanying drawings, Figure 1 shows a pipe 12 having a closure member 21 recovered about it, with the ends of the closure member secured together by patch member 13. As shown in Figure 2, the patch member 13 comprises a cross-linked polymeric sheet 14 having a layer 15 of hot-melt adhesive adherent thereto, with marginal portions 16 and 17 of pressure-sensitive adhesive. Figure 3 is a cross-sectional view of the closure member prior to installation, showing cross-linked heat-shrinkable polymeric sheet 22 having adherent thereto a layer 23 of adhesive or mastic.

Figures 4, 5 and 6 illustrate the method of the present invention. As shown in Figure 4, the closure member 21 is wrapped around the substrate 12 with the marginal portions 23 and 25 overlapping. Then patch 13 is approximately centered over the line formed by the exposed end 23, as shown in Figure 5. When in place, the panel 13 is heated, for example, by means of a torch 26 as shown in Figure 6 or by other suitable heating means, to render the adhesive 15 tacky and is then pressed into firm contact with the closure member 21. Finally the exposed exterior surface of the closure member is heated to cause recovery thereof. Figure 7 illustrates a typical transition in a pipe system of the kind referred to in the Examples below in which a pipe 27, 29 is surrounded at one point with a collar 28 of greater external diameter.

The following Examples, in which all percentages are by weight, illustrate the invention. The term length connotes the dimension of the patch or closure member which is parallel to the longitudinal axis of the substrate when applied while width is the dimension transverse to the substrate longitudinal axis. Both the patch and the closure member are ordinarily extruded in sheet form with the width of the sheet as extruded being the length of the patch or closure when applied to the substrate. Closure members in accordance with the present invention would ordinarily be supplied in rolls from which the installer would cut off the desired length to obtain a closure suitable for the diameter of the substrate.

### Example 1

The patch member used in this Example is 45.7 cm (18 inches) long and 15.24 cm (6 inches) wide and consists of a 0.508 mm (20 mil) thick sheet of cross-linked high density polyethylene having a modulus at 150°C of 77,330 kg.m$^{-2}$ (110 psi) and having adherent to one surface thereof a layer 0.635 mm (25 mils) thick of a lightly cross-linked hot melt adhesive. The patch member is made by coating, onto a sheet of high density polyethylene which has been cross-linked by irradiation to a modulus at 150°C of 24,600 kg.m$^{-2}$ (35 psi), a layer of an adhesive composition comprising 72.82% of an ethylene/ethyl acrylate copolymer containing about 20% of ethyl acrylate (DPD 6181) 24.27% of a tackifier (Nevpene 9500), 1.94% of an antioxidant (Irganox 1010-tetrakis [methylene 3-(3′,5′-di-tert-butyl-4′-hydroxyphenyl)propionate]methane) and 0.97% of a radiation cross-linking promoter (triallyl iso-cyanate), and then irradiating the adhesive coating to a dosage of 10 megarads.

The closure members used in this Example comprise uniaxially uniformly expanded sheets of cross-linked high density polyethylene, 45.7 cm (18 inches) long. Table I below shows the modulus at 150°C, the expansion ratio and the thickness before expansion of each of the sheets. The sheets have a coating 1.52 mm (60 mils) thick of a mastic on one surface thereof.

The substrate used in this Example consists of a steel pipe having a concrete lining 0.95 cm (3/8 inch) thick. The pipe has an outer diameter of 8 inches and the thickness of the steel is 0.635 cm (1/4 inch). Mounted concentrically on the centre of the pipe, is a steel collar 10.2 cm (4 inches) long having an outer diameter of 35.6 cm (14 inches). The closure member is wrapped around the substrate, with the mastic coating on the inside and with the collar in the middle of the sheet, and with an overlap of about 10.2 cm (4 inches). The patch is then placed symmetrically over the exposed edge of the sheet and heated by means of a flame gun until the patch adhesive has reached its tack point and bonded the patch to the sheet; the patch is pressed against the sheet by hand using an insulated glove during the heating. The exposed surface of the remainder of the sheet is then heated to cause recovery thereof. Table I below shows the width of the patch and the slippage of the patch at the end of the procedure.

Further experiments under identical conditions except using a patch member 20.3 cm (8 inches) wide show that under these circumstances, patch slippage is completely eliminated.

Further experiments under identical conditions except that the patch member is an 20.3 cm (8 inches) wide glass-fibre reinforced sheet as disclosed in U.S. Patent No. 4,200,676 result in the sheet recovering in such a fashion that it slips out of contact with the patch, exposing the substrate.

TABLE I

| Sheet No. | Thickness Before Expansion (mm) | Recovery Force (Kg.m$^{-1}$) | Expansion Ratio | Modulus (Kg./m$^{-2}$) | Patch Slippage (mm) | Final Patch Width (cm) |
|---|---|---|---|---|---|---|
| 1 | 1.12 | 16.4 | 1.47 | 24,300 | 1.6—6.3 | 17.1—17.8 |
| 2 | 1.09 | 21.8 | 1.67 | 25,400 | 3.2—12.5 | 16.1—19.7 |
| 3 | 1.09 | 28.6 | 2.00 | 24,900 | 6.3—22.2 | 19.1 |
| 4 | 1.09 | 30.7 | 2.08 | 25,400 | 3.2—9.5 | 17.8 |
| 5 | 1.50 | 44.9 | 2.0 | 27,000 | 6.3—31.8 | 17.1—21.6 |
| 6 | 1.52 | 46.3 | 2.04 | 28,100 | 4.8—12.5 | 19.7—21.6 |
| 7 | 1.52 | 59.2 | 2.56 | 26.900 | 6.3—28.6 | 20.3—21.6 |
| 8 | 1.55 | 76.0 | 3.33 | 25,200 | 6.3—22.2 | 21.0—22.5 |
| 9 | 2.08 | 69.7 | 3.23 | 17,800 | 6.3—25.4 | 20.3 |
| 10 | 2.08 | 87.8 | 3.85 | 18,600 | 6.3—19.0 | 21.6 |
| 11 | 2.08 | 88.3 | 4.00 | 17,900 | 6.3—19.0 | 22.2 |
| 12 | 2.08 | 105.0 | 4.76 | 17,800 | 3.2—95. | 21.3 |

### Example 2

The procedure of Example 1 is followed except that (1) the shjeet closure member was 30.5 cm (12 inches) by 132.1 cm (52 inches) and has an expansion ratio of about 1.3 and an $M_{100}$ modulus at 150°C of 24,600 kg.m$^{-2}$ (35 psi); (2) the patch member is 15.24 cm (6 inches) wide and 30.5 cm (12 inches) long, (3) the pipe has an outer diameter of 40.6 cm (16 inches) and the collar has an outer diameter of 40.7 cm (18 inches), and the sheet when wrapped affords an overlap of about 7.6 cm (3 inches). The patch stretches by about 15% in width and does not slip.

### Example 3

The procedure of Example 2 is repeated except that the patch member is only 10.2 cm (4 inches) wide. A similarly satisfactory result is obtained. However, use of a 10.2 cm (4 inches) wide glass-fibre reinforced patch as described in U.S. Patent No. 4,200,676 results in failure, the sheet recovering to such an extent that it slips out of contact with the patch exposing the substrate.

### Example 4

The procedure of Example 2 is repeated with a series of pipes of varying diameter except that the patch member is only 5.1 cm (2 inches) wide and the substrate is a pipe of uniform diameter 5.1, 15.2, 20.3, 35.6 or 122 cm (2, 6, 8, 14 or 48 inches). A satisfactory result is obtained in all cases.

### Example 5

The patch member of this Example is 3.8 cm (1.5 inches) long and 10.2 cm (4 inches) wide and consists of a 0.51 mm (20 mil) thick sheet of cross-linked high density polyethylene having a modulus at 150°C of 59,800 kg.m$^{-2}$ (85 psi) and having adherent to one side thereof a 0.64 mm (25 mil) thick layer of a cross-linked hot melt adhesive as described in Example 1.

The closure member is a uniformly expanded sheet of cross-linked high density polyethylene, 2.1 mm (82 mil) thick and 3.8 cm (1.5 inches) long, and having a modulus at 150°C of 17,600 kg.m$^{-2}$ (25 psi) and an expansion ratio of 4.8:1. The sheet has a coating 1.52 mm (60 mils) thick of a mastic on one surface thereof. The substrate is a steel pipe having an outer diameter of 10.2 cm (4 inches) and a thickness of 0.76 mm (30 mils). The closure member is wrapped around the substrate, with the mastic coating on the inside and with an overlap of about 10.2 cm (4 inches). The patch is then placed symmetrically over the exposed edge of the overlapping portion sheet and heated by means of a flameless heat gun until the patch adhesive has reached its tack point and bonded the patch to the sheet; the patch is pressed against the sheet by hand using an insulated glove during the heating. The remainder of the sheet is then heated to cause recovery thereof. The ends of the sheet remain overlapping, with the patch covering the overlap area.

### Example 6

The procedure of Example 5 is followed except that the sheet closure member had no mastic coating in the overlap area. A similar satisfactory result is obtained.

### Example 7

The patch member used in this Example is 4 inches long and 6.35 cm (2.5 inches) wide and consists of a 0.64 mm (25 mils) thick sheet of cross-linked high density polyethylene having a modulus at 150°C of 38,700 $kg.m^{-2}$ (55 psi) and having adherent thereto a layer 0.64 mm (25 mils) thick of a cross-linked hot melt adhesive as described in Example 1. The closure members are uniformly expanded sheets of cross-linked high density polyethylene, 10.2 cm (4 inches) long. Table II below shows the modulus at 150°C, the expansion ratio and the thickness before expansion of each of the sheets. All the sheets have a coating 1.52 mm (60 mils) thick of a mastic on one surface thereof. The substrate consists of a solid aluminum cylinder having an outer diameter of 3.8 cm (1.5 inches) and mounted concentrically on the centre of the cylinder, an aluminum collar 2.54 cm (1 inch) long and having an outer diameter of 7.6 cm (3 inches). The closure member is wrapped around the substrate, with the mastic coating on the inside and with the collar in the middle of the sheet, and with an overlap of about 15.2 cm (6 inches). The patch is then placed symmetrically over the exposed edge of the over-lapping portion of the sheet and heated by means of a flameless heat gun until the adhesive has reached its tack point and bonded the patch to the sheet; the patch is pressed against the sheet by hand using an insulated glove during the heating. The remainder of the sheet is then heated to cause recovery thereof. When using Sheet No. 4, the patch slips out of contact with the sheet, but in the other runs a satisfactory result is obtained.

### TABLE II

| Sheet No. | Thickness before expansion (mm) | Expansion Ratio | Modulus $(kg.m^{-2})$ | Recovery Force $(Kg.m^{-1})$ |
|---|---|---|---|---|
| 1 | 0.38 | 3 | 38,700 | 8.04 |
| 2 | 0.38 | 3 | 38,700 | 26.8 |
| 3 | 1.02 | 8 | 10,600 | 51.8 |
| 4 | 1.02 | 3 | 38.700 | 69.7 |

The values for tensile strength and elongation given in this specification and in the appended claims are measured by the method of ASTM D—638. The values for moudlus at 150°C are measured by the following test, which measures the stress required to elongate the article by 100% at 150°C. Marks separated by 2.54 cm (1 inch) are placed on the centre section of a die-cut specimen and the sample is hung vertically in an oven maintained at 150°C, with a 2 gm. weight attached to the lower end of the sample. After equilibrating for 2 minutes, the weight attached to the lower end of the sample is increased until the distance between the marks has increased by 100%. The modulus (also known as the $M_{100}$ value) is then calculated from the expression

$$Modulus = \frac{stress}{initial\ cross\text{-}sectional\ area}$$

Lap shear is determined in accordance with the method of ASTM D—1002 with the modification that the thickness of the adhesive in the determination is equal to the thickness of adhesive to be used in the arrangement, and the further modification that the composition of the substrates used in the determination are the same as those of the patch member and the closure member of the arrangement of the invention.

The peel strength is determined by heat-recovering a sheet of polymeric materials to be used for the cover member about a drum of 25 mm length and 25 mm diameter so that the polymeric material covers, and is bonded to, the entire circumference of the drum. The surface of polymeric material is cleaned and degreased and a strip of the material to be used for the patch member approximately 50 mm in length is wrapped around the drum with the layer of adhesive interposed between them, and the assembly is heated in an oven at 150°C for 20 minutes to bond the two materials together. The drum is then mounted with its axis horizontal so that it is freely rotatable and the outer layer of material is peeled off in a radial direction at a rate of $50 \pm 5$ mm per minute at $23 \pm 2°C$ using a suitable tensile test apparatus, the force required to peel the material being recorded as the peel strength.

## Claims

1. An arrangement for covering at least part of an elongate substrate (12) which comprises a heat-recoverable polymeric closure member (21) in sheet form adapted to be wrapped around the substrate so that one edge portion thereof overlies an opposite edge portion and recovered about the substrate by the application of heat, a patch member (13) for retaining the edge portions together during recovery of the closure member, and a layer (15) of adhesive having a tack temperature below the recovery temperature of the closure member for securing the patch member to the closure member during recovery of the closure member, characterised in that the layer (15) of adhesive has a lap shear strength at 150°C of from 200 to 14,100 kg.m$^{-2}$ and the patch member (13) has a modulus at 150°C of from 1400 to 141,000 kg.m$^{-2}$ and an elongation at 150°C of from 10 to 1000%, the arrangement being such that when the closure member is heated, it will recover about the substrate with the edge portions thereof retained together by the patch member and recovery of the closure member will cause at least part of the patch member to stretch by at least 5% in the direction of recovery of the closure member.

2. An arrangement as claimed in claim 1 characterised in that the layer (15) of adhesive has a lap shear strength at 150° of from 700 to 8,500 kg.m$^{-2}$.

3. An arrangement as claimed in claim 1 or claim 2, characterised in that the adhesive has a melt viscosity at 150°C of at least 10$^2$ poise, preferably at least 10$^4$ poise.

4. An arrangement as claimed in any one of claims 1 to 3, characterized in that the adhesive has a peel strength of at least 90 kg.m$^{-1}$.

5. An arrangement as claimed in any one of claims 1 to 4, characterized in that the patch member (13) has a modulus of from 35,000 to 106,000 kg.m$^{-2}$.

6. An arrangement as claimed in any one of claims 1 to 5, characterized in that the patch member (13) has an elongation at 150°C of from 50 to 200%.

7. An arrangement as claimed in any one of claims 1 to 6, characterized in that the patch member (13) comprises a cross-linked polymeric material.

8. An arrangement as claimed in any one of claims 1 to 7, characterized in that the product of the thickness of the patch member (13) and the modulus at 150°C of the patch member (13) is in the range of from 0.2 to 20 times the maximum recovery force (per unit length) of the closure member (21).

9. A method of covering at least part of an elongate substrate (12) which comprises wrapping a polymeric closure member (21) in sheet form around the substrate so that one edge portion of the closure member overlies an opposite edge of the closure member, heating a layer (15) of adhesive to its tack temperature and placing the layer of adhesive and a patch member (13) over the exposed edge (23) and outwardly disposed edge portions of the closure member so that the layer of adhesive is interposed between the closure member and the patch member, pressing the patch member against the closure member to bond them together, and heating the closure member to cause it to recover into circumferential contact with the substrate, characterized in that the closure member (21), the layer (15) of adhesive and the patch member (13) together form an arrangement as claimed in any one of claims 1 to 8, and that the method is conducted under conditions such that the patch member remains bonded to the closure member over at least a major portion of its length and at least part of the patch member is stretched by at least 5% in the direction of recovery of the closure member.

## Patentansprüche

1. Eine Anordnung zum Bedecken wenigstens eines Teils eines länglichen Substrats (12), mit einem wärmerückstellbaren polymeren Verschlussteil (21) in Folienform, das geeignet ist, derart um das Substrat herumgewickelt zu werden, dass ein Randbereich davon über einen gegenüberliegenden Randbereich zu liegen kommt, und durch die Anwendung von Wärme um das Substrat rückgestellt zu werden, einem Flickenteil (13) zum Zusammenhalten der Randbereiche während der Rückstellung des Verschlussteils und einer Schicht (15) eines Klebstoffs, der zum Festhalten des Flickenteils an dem Verschlussteil während der Rückstellung des Verschlussteils eine Klebrigkeitstemperatur unterhalb der Rückstelltemperatur des Verschlussteils aufweist, dadurch gekennzeichnet, dass die Schicht (15) des Klebstoffs eine Überlappt-Scherfestigkeit bei 150°C von 200 bis 14.100 kg.m$^{-2}$ aufweist und der Flickenteil (13) einen Modul bei 150°C von 1400 bis 141.000 kg.m$^{-2}$ und eine Dehnung bei 150°C von 10 bis 1000% besitzt, wobei die Anordnung derart ist, dass sie sich, wenn das Verschlussteil erwärmt wird, um das Substrat herum zurückstellt, die Randbereiche davon durch das Flickenteil zusammengehalten werden und die Rückstellung des Verschlussteils eine Streckung wenigstens eines Teils des Flickenteils um wenigstens 5% in Richtung der Rückstellung des Verschlussteils verursacht.

2. Eine Anordnung nach Anspruch 1, dadurch gekennzeichnet, dass die Schicht (15) des Klebstoffs eine Überlappt-Scherfestigkeit bei 150°C von 700 bis 8500 kg.m$^{-2}$ besitzt.

3. Eine Anordnung gemäss Anspruch 1 oder 2, dadurch gekennzeichnet, dass der Klebstoff eine Schmelzviskosität bei 150°C von wenigstens 10$^2$ Poise, vorzugsweise wenigstens 10$^4$ Poise aufweist.

4. Eine Anordnung nach einem der Ansprüche 1 bis 3, dadurch gekennzeichnet, dass der Klebstoff eine Abschälfestigkeit von wenigstens 90 kg.m$^{-1}$ besitzt.

5. Eine Anordnung nach einem der Ansprüche 1 bis 4, dadurch gekennzeichnet, dass das Flickenteil (13) einen Modul von 35.000 bis 106.000 kg.m$^{-2}$ besitzt.

6. Eine Anordnung nach einem der Ansprüche 1 bis 5, dadurch gekennzeichnet, dass das Flickenteil (13) eine Dehnung bei 150°C von 50 bis 200% besitzt.

7. Eine Anordnung nach einem der Ansprüche 1 bis 6, dadurch gekennzeichnet, dass das Flickenteil (13) ein vernetztes polymeres Material enthält.

8. Eine Anordnung nach einem der Ansprüche 1 bis 7, dadurch gekennzeichnet, dass das Produkt der Dicke des Flickenteils (13) und des Moduls bei 150°C des Flickenteils (13) im Bereich des 0,2 bis 20fachen der maximalen Rückstellkraft (pro Längeneinheit) des Verschlussteils (21) liegt.

9. Ein Verfahren zum Bedecken wenigstens eines Teils eines länglichen Substrats (12), wobei ein polymeres Verschlussteil (21) in Folienform so um das Substrat gewickelt wird, dass ein Randbereich des Verschlussteils über einen gegenüberliegenden Rand des Verschlussteils zu liegen kommt, eine Schicht (15) eines Klebstoffs auf seine Klebrigkeitstemperatur erwärmt wird und die Klebstoffschicht und ein Flickenteil (13) über dem freiliegenden Rand (23) und den aussen liegenden Randbereichen des Verschlussteils angeordnet werden, so dass die Klebstoffschicht zwischen dem Verschlussteil und dem Flickenteil angeordnet ist, der Flickenteil gegen das Verschlussteil gedrückt wird, um sie miteinander zu verkleben, und das Verschlussteil erwärmt wird, um es zur Rückstellung in Umfangskontakt mit dem Substrat zu veranlassen, dadurch gekennzeichnet, dass das Verschlussteil (21), die Schicht (15) des Klebstoffs und das Flickenteil (13) zusammen eine Anordnung nach einem der Ansprüche 1 bis 8 bilden, und dass das Verfahren unter solchen Bedingungen durchgeführt wird, dass das Flickenteil über wenigstens einen grösseren Bereich seiner Länge mit dem Verschlussteil verbunden bleibt und wenigstens ein Teil des Flickenteils um wenigstens 5% in Richtung der Rückstellung des Verschlussteils gestreckt wird.

## Revendications

1. Arrangement pour couvrir au moins en partie un substrat oblong (12), qui comprend une enveloppe (21) en polymère rétractable à chaud sous la forme d'une feuille agencée pour être enroulée autour du substrat de façon à ce qu'une partie d'extrémité de celui-ci recouvre une partie d'extrémité opposée; et, pour se rétracter autour du substrat grâce à l'apport de chaleur, un élément formant pièce (13) destinée à maintenir ensemble les parties d'extrémité pendant la rétractation de l'enveloppe, et une couche (15) d'un adhésif, dont la température d'adhésivité est inférieure à la température de rétractation de l'enveloppe, destinée à fixer la pièce sur l'enveloppe pendant la rétractation de l'enveloppe caractérisé par le fait que la couche (15) d'adhésif a une résistance au cisaillement en recouvrement à 150°C comprise entre 200 et 14.100 kg.m$^{-2}$ et la pièce (13) a un module à 150°C compris entre 1.400 et 141.000 kg.m$^{-2}$ et un allongement à 150°C compris entre 10 et 1000%, l'arrangement étant tel que lorsque l'enveloppe est chauffée, elle se rétracte autour du substrat, ses parties d'extrémité étant maintenues ensemble par l'élément formant la pièce, et la rétractation de l'enveloppe provoquant l'étirement d'au moins une partie de la pièce, d'au moins 5%, dans la direction de rétractation de l'enveloppe.

2. Arrangement selon la revendication 1, caractérisé par le fait que la couche (15) d'adhésif présente une résistance au cisaillement en recouvrement à 150°C comprise entre 700 et 8.500 kg.m$^{-2}$.

3. Arrangement selon l'une des revendications 1 et 2, caractérisé par le fait que l'adhésif présente une viscosité en fusion à 150°C d'au moins 10$^2$ poises, et de préférence d'au moins 10$^4$ poises.

4. Arrangement selon l'une des revendications 1 à 3, caractérisé par le fait que l'adhésif présente une résistance au pelage d'au moins 90 kg.m$^{-1}$.

5. Arrangement selon l'une des revendications 1 à 4, caractérisé par le fait que l'élément formant pièce (13) a un module compris entre 35.000 et 106.000 kg.m$^{-2}$.

6. Arrangement selon l'une des revendications 1 à 5, caractérisé par le fait que l'élément formant pièce (13) a un allongement à 150°C compris entre 50 et 200%.

7. Arrangement selon l'une des revendications 1 à 6, caractérisé par le fait que l'élément formant pièce (13) comprend un matériau polymère réticulé.

8. Arrangement selon l'une des revendications 1 à 7, caractérisé par le fait que le produit de l'épaisseur de l'élément formant pièce (13) et du module à 150°C de l'élément formant pièce (13) est compris entre 0,2 et 20 fois la force de rétractation maximale (par unité de longueur) de l'enveloppe (21).

9. Procédé pour couvrir au moins une partie d'un substrat oblong (12), dans lequel on enroule une enveloppe en polymère (21), sous la forme d'une feuille, autour du substrat de façon à ce qu'une partie d'extrémité de l'enveloppe recouvre une extrémité opposée de l'enveloppe, on chauffe une couche (15) d'adhésif jusqu'à sa température d'adhésivité et l'on dispose la couche d'adhésif et un élément formant pièce (13) au-dessus de l'extrémité visible (23) et des parties d'extrémité dirigées vers l'extérieur de l'enveloppe, de sorte que la couche d'adhésif soit intercalée entre l'enveloppe et la pièce, on presse la pièce contre l'enveloppe pour les souder ensemble, et on chauffe l'enveloppe pour provoquer sa rétractation et la mettre en contact avec la périphérie du substrat, caractérisé par le fait que l'enveloppe (21), la couche (15) d'adhésif et la pièce (13) forment ensemble un arrangement tel que revendiqué dans l'une des revendications 1 à 8, et que le procédé est mis en oeuvre dans des conditions telles que la pièce reste soudée sur l'enveloppe sur au moins la majeure partie de sa longueur et qu'au moins une partie de la pièce est étirée d'au moins 5% dans la direction de rétractation de l'enveloppe.

0 023 788

Fig.1.

Fig.2.

Fig.3.

Fig.4.

Fig.5.

Fig.6.

Fig.7.